Europäisches Patentamt

European Patent Office

Office européen des brevets

(11) Veröffentlichungsnummer: **0 125 203**
**A2**

(12) **EUROPÄISCHE PATENTANMELDUNG**

(21) Anmeldenummer: **84810157.2**

(22) Anmeldetag: **02.04.84**

(51) Int. Cl.³: **A 61 C 8/00**

(30) Priorität: **12.04.83 CH 1958/83**

(43) Veröffentlichungstag der Anmeldung:
**14.11.84 Patentblatt 84/46**

(84) Benannte Vertragsstaaten:
**AT BE DE FR GB IT NL SE**

(71) Anmelder: **Robert Mathys Co**
**Güterstrasse 5**
**CH-2544 Bettlach(CH)**

(72) Erfinder: **Mathys, Robert, Dr. med. h.c.**
**Bahnhofstrasse 10**
**CH-2544 Bettlach(CH)**

(74) Vertreter: **Eder, Carl E. et al,**
**Patentanwaltsbüro Eder & Cie Münchensteinerstrasse 2**
**CH-4052 Basel(CH)**

(54) **Hilfsmittel um den dichten Anschluss des Zahnfleisches an einen von einem Kieferknochen nach aussen führenden Metallpfeiler zu ermöglichen.**

(57) Bei diesem Hilfsmittel handelt es sich um eine gesinterte Hülse (1) aus Hydroxylapatit, die aussen (1b) eine poröse und innen (1a) eine vorzugsweise glatte, dichte, kompakte und porenfreie Schicht aufweist. Eine solche Hülse lässt sich auf dem Pfeiler eines im Kiefer zu verankernden Implantates anbringen und dort mittels eines Klebstoffes befestigen. Versuche haben gezeigt, dass sowohl der Kieferknochen als auch die Zahnschleimhaut in die poröse Aussenschicht des Hydroxylapatites einewächst, wodurch die dichte Verbindung gewährleistet ist, die nötig ist, damit keine Infektion des Kieferknochens von aussen erfolgen kann.

Fig.1

EP 0 125 203 A2

Robert Mathys Co., Bettlach (Schweiz)

Hilfsmittel um den dichten Anschluss des Zahnfleisches an einen von einem Kieferknochen nach aussen führenden Metallpfeiler zu ermöglichen

Es sind schon die verschiedensten Implantate zum Einsetzen in den Kiefer bekannt, die mit einem oder mehreren Pfeilern versehen sind, die dazu dienen, eine Suprastruktur aufzubauen. Bei dieser Suprastruktur kann es sich um den Ersatz eines einzelnen Zahnes oder aber um eine ganze Brücke handeln. Die Schwierigkeit bei all diesen Implantaten besteht darin, dass das Zahnfleisch sich nicht hinreichend gut oder dicht an die Pfeiler anschmiegt, so dass die Möglichkeit einer Infektion des Knochens besteht. Der Behebung dieses Mangels dient die vorliegende Erfindung. Bei dieser Erfindung handelt es sich einerseits um ein Hilfsmittel, um den dichten Anschluss des Zahnfleisches an einen von einem Kieferknochen nach aussen führenden Metallpfeiler zu ermöglichen, und andererseits um ein Implantat mit mindestens einem das Zahnfleisch zu durchdringen bestimmten metallenen Pfeiler.

Das Hilfsmittel ist dadurch gekennzeichnet, dass es aus einer gesinterten Hülse aus Hydroxylapatit besteht, die eine poröse Aussenschicht aufweist, wobei in dem an die Aussenschicht angrenzenden Gebiet das Porenvolumen 100 - 150 % des Volumens des Hydroxylapatits, mit anderen Worten 50 - 60 % des Gesamtvolumens, ausmachen kann, während die Hülseninnenschicht vorzugsweise aus kompaktem, porenfreiem Material besteht.

16407/Ed/us/Fall 11

Das erfindungsgemässe Implantat ist dadurch gekennzeichnet, dass jeder Pfeiler mit einer eine poröse Aussenschicht aufweisenden Hülse aus Hydroxylapatit versehen ist, die mit dem Pfeiler fest und dicht, beispielsweise mit Hilfe eines Klebstoffes, vorzugsweise eines Kunstharzes oder Silikon-Klebstoffes, verbunden ist.

Zur Herstellung einer derartigen Hülse wird Hydroxylapatitpulver zu einer Hülse gepresst und diese Hülse wird unter an sich bekannten Bedingungen gesintert, wodurch das amorphe Pulver in kristallines Hydroxylapatit umgeformt wird.

An sich könnte der Verdacht bestehen, dass es naheliegend ist, Zahn- oder Knochenmaterial oder sogar reines Hydroxylapatit, aus welchem ja die organischen Teile der Knochen und der Zähne bestehen, zur Herstellung von künstlichen Zähnen oder deren Aussenflächen und auch von Hülsen an Implantaten zu verwenden.

Solche Vorschläge wurden schon gemacht (DE-AS 1 067 975, DE-OS 2 540 077, Journal of Prosth. Dentistry, 1979, June, Seiten 644-649). Aus all diesen Vorschlägen zeigt sich aber nur, dass sowohl das Knochengewebe wie auch die Deckhaut zwar an die aus derartigen Materialien bestehenden Abdeckungshülsen heranwachsen kann, dass aber ein Hineinwachsen auch dann nicht erfolgt, wenn die betreffenden Hülsen mit einer aufgerauten Oberfläche versehen werden. Im Unterschied dazu bewirkt jedoch das poröse Gefüge von Hydroxylapatit ein Hineinwachsen des Gewebes, so dass die benötigte feste und dichte Verbindung zwischen Gewebe und Zahnersatz entsteht, die verhindert, dass irgend etwas zwischen der Oberfläche des Zahnersatzes und die Deckhaut eindringen kann.

Nachfolgend wird anhand der beiliegenden Zeichnung ein Ausführungsbeispiels der Erfindung beschrieben.

In der Zeichnung zeigt

die Figur 1      einen stark vergrösserten Längsschnitt durch eine erfindungsgemässe Hülse und

die Figur 2      einen ebenfalls stark vergrösserten Vertikalschnitt durch ein im Kiefer eingesetztes Implantat.

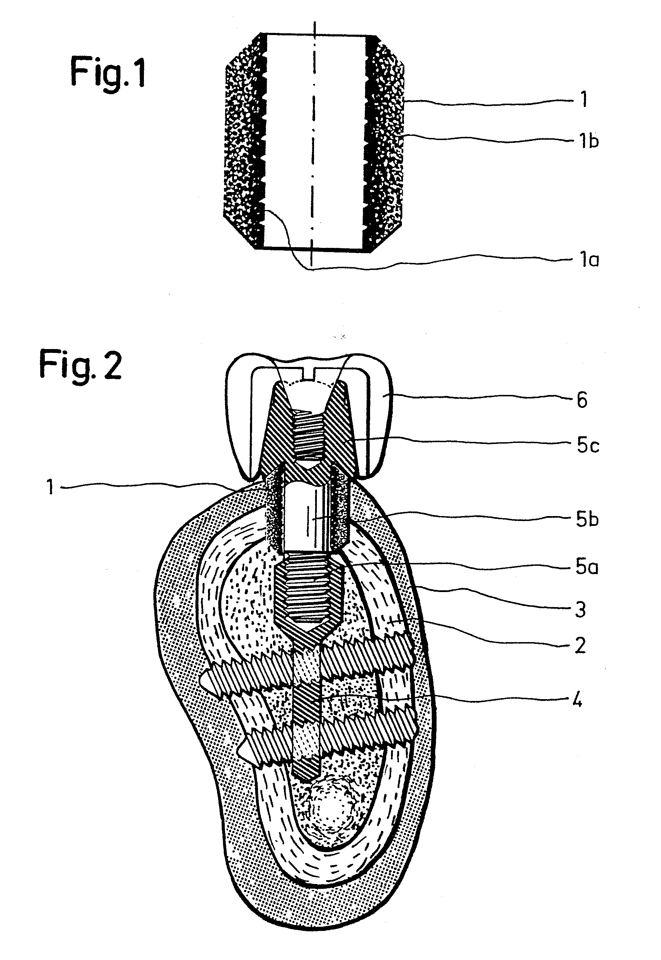

Die in der Figur 1 dargestellte, als Ganzes mit 1 bezeichnete Hülse besteht aus Hydroxylapatit. Die Hülsen-Innenschicht 1a ist dicht, während das Gefüge der Aussenschicht und das an diese angrenzende Gebiet porös sind, so dass das Porenvolumen mindestens so gross ist oder sogar bis zur Hälfte grösser ist als das Volumen des Materials, mit anderen Worten, das Porenvolumen kann 50 - 60 % des Gesamtvolumens ausmachen.

Die Hülsen können je nach Bedarf vom Zahnarzt oder Kieferchirurgen oder auch gewerbsmässig von einem Implantathersteller auf den Pfeiler eines Implantates aufgezogen und dort mit Hilfe eines Klebstoffes, also beispielsweise eines für medizinische Zwecke zugelassenen Kunstharzes oder Silikon-Klebstoffes, befestigt werden.

Die Figur 2 zeigt einen Schnitt durch einen Unterkiefer, in welchem der Kieferknochen mit 2 und die Gingiva (das Zahnfleisch) mit 3 bezeichnet sind. Im Knochen eingesetzt ist ein Implantat, das aus einem unteren Teilstück 4 und einem in dieses eingeschraubten oberen Teilstück 5 gebildet wird. Dieses obere Teilstück 5 ist als Pfeiler ausgebildet, um eine hier mit 6 bezeichnete Suprastruktur aufzunehmen, welche im gezeichneten Beispiel aus einem aufgeschraubten Kunstzahn besteht. Der Pfeiler besitzt also drei Abschnitte, den unteren, der mit einem Gewinde 5a versehen ist, dem mittleren 5b, der das Zahnfleisch 3 durchdringt, und dem oberen 5c, auf welchem die Suprastruktur aufgeschraubt ist. Der mittlere Abschnitt 5b ist nun mit einer Hülse 1 versehen, die mit dem Pfeiler fest und dicht verbunden ist und die eine poröse Aussenschicht aufweist, so wie sie vorstehend bereits beschrieben ist.

Versuche haben gezeigt, dass sowohl das Knochenmaterial des Kiefers wie auch das Zahnfleisch in die poröse Aussenschicht der Hülse einwachsen, wodurch die benötigte feste und dichte Verbindung mit dem Implantatpfeiler entsteht, die verhindert, dass irgendwelche Keime von aussen zum Kieferknochen gelangen können.

PATENTANSPRÜCHE

1. Hilfsmittel um den dichten Anschluss des Zahnfleisches an einen von einem Kieferknochen nach aussen führenden Metallpfeiler zu ermöglichen, dadurch gekennzeichnet, dass es aus einer gesinterten Hülse (1) aus Hydroxylapatit besteht, die eine poröse Aussenschicht (1b) aufweist.

2. Hilfsmittel nach Anspruch 1, dadurch gekennzeichnet, dass in dem an die Aussenschicht (1b) angrenzenden Gebiet das Porenvolumen 100 - 150 % des Volumens des gesinterten Materials ausmacht.

3. Hilfsmittel nach Anspruch 1 oder 2, dadurch gekennzeichnet, dass die Hülseninnenschicht (1a) aus kompaktem, porenfreiem Material besteht.

4. Zum Einsetzen in einen Kieferknochen bestimmtes und dem Aufbau einer Suprastruktur dienendes Implantat mit mindestens einem das Zahnfleisch zu durchdringen bestimmten metallenen Pfeiler (5), dadurch gekennzeichnet, dass dieser mit einer eine poröse Aussenschicht aufweisenden gesinterten Hülse (1) aus Hydroxylapatit versehen ist, die mit dem Pfeiler fest und dicht verbunden ist.

5. Implantat nach Anspruch 4, dadurch gekennzeichnet, dass die Hülse (1) mit dem Pfeiler mittels eines Klebstoffes verbunden ist.

6. Implantat nach Anspruch 5, dadurch gekennzeichnet, dass der Klebstoff ein Kunstharz oder Silikon-Klebstoff ist.

Fig.1

1
1b
1a

Fig. 2

6
5c
1
5b
5a
3
2
4